# EUROPEAN PATENT SPECIFICATION

(11) **EP 0 857 429 B1**
(45) Date of publication and mention of the grant of the patent: **25.06.2003**
(21) Application number: 95934828.5
(22) Date of filing: 18.10.1995
(51) Int. Cl.: A23L 1/315, A23L 1/317

(54) **PROCESS FOR PRODUCING FOAMED MEAT PROCESSED FOODS**
VERFAHREN ZUR HERSTELLUNG VON NAHRUNGSMITTELN AUF DER BASIS VON PASSIERTEM FLEISCH
PROCEDE DE FABRICATION D'ALIMENTS TRANSFORMES EN MOUSSE DE VIANDE

(43) Date of publication of application: 12.08.1998
(73) Proprietor: KABUSHIKI KAISHA KIBUN SHOKUHIN, Chuo-ku, Tokyo 104 (JP)
(72) Inventor: NOZAKI, Hisashi, Saitama 353 (JP)
(74) Representative: Casalonga, Axel
(86) International application number: JP9502131
(87) International publication number: WO97014320

(56) References cited:
- EP-A- 0 590 172
- DE-A- 3 446 829
- JP-A- 4 278 062
- JP-A- 60 006 177
- JP-A- 64 002 555
- PATENT ABSTRACTS OF JAPAN vol. 014, no. 053 (C-0683), 31 January 1990 & JP 01 281062 A (SHIYOUBEE:KK), 13 November 1989
- PATENT ABSTRACTS OF JAPAN vol. 015, no. 472 (C-0889), 29 November 1991 & JP 03 201967 A (SHIYOUBEE:KK), 3 September 1991
- PATENT ABSTRACTS OF JAPAN vol. 014, no. 232 (C-0719), 17 May 1990 & JP 02 057163 A (SHIYOUBEE:KK), 26 February 1990
- PATENT ABSTRACTS OF JAPAN vol. 014, no. 096 (C-0692), 22 February 1990 & JP 01 304867 A (FUJI OIL CO LTD), 8 December 1989
- PATENT ABSTRACTS OF JAPAN vol. 097, no. 008, 29 August 1997 & JP 09 098744 A (KIBUN FOODS INC), 15 April 1997
- PATENT ABSTRACTS OF JAPAN vol. 097, no. 005, 30 May 1997 & JP 09 000207 A (ITO HAM KK), 7 January 1997
- PATENT ABSTRACTS OF JAPAN vol. 096, no. 003, 29 March 1996 & JP 07 289203 A (KIBUN FOODS INC;OTHERS: 01), 7 November 1995

## Description

### Technical Field

This invention relates to a process for producing foamed processed meat foods. Because of having been foamed, the foods produced by the process of the present invention are characterized by soft texture and easiness to eat.

### Background Art

JP 01 281062, JP 03 201967 and JP 01 304867 disclose a process for the production of foamed ground fish meat. DE 34 46 829 discloses foamed sausages of pork and beef.

Meat matches well modern eating habits and, therefore, meat per se and processed meat products are both popular broadly. Processed meat products involve various ones, for example, ham, sausage, bacon, corned beef and roasted pork. These processed products have the inherent structure and texture of meat, thus showing crispness. In recent years, however, consumers would make a choice to soft foods and prefer processed ground meat foods to those having the characteristic texture of meat. However, there is no processed meat food with soft texture at the present time except hamburger steak and products similar thereto. Namely, although there are potential needs for soft processed meat products, there is no food satisfying this requirement in practice.

Under these circumstances, an object of the present invention is to provide a novel process for producing processed meat foods having soft and light texture. To achieve this object, the present inventors have designed foamed processed meat foods and studied on a process for producing the same.

### Disclosure of the Invention

Thus the present inventors have found that foamed processed meat foods having soft texture can be produced by a process as defined in claims 1-6. The process comprises mixing meat with sodium chloride under agitation (so-called "shio-zuri"), foaming the resultant composition by stirring and then molding and heating it, thus achieving the above-mentioned object.

The meat to be used in the present invention may be an arbitrary one, so long as it is selected from edible ones (beef, pork, chicken, mutton, horse, rabbit, etc. ) . It is also possible to use two or more meats. In usual, use is made of one or more meats such as beef, pork or chicken. If desired, the meat may be processed into ground meat, etc. so as to facilitate the processing. The meat may be used together with other materials such as fish meat.

To produce foamed products, it is needed that the meat is first subjected to shio-zuri to thereby solubilize proteins, thus facilitating the subsequent foaming by stirring. The shio-zuri may be performed by a method commonly employed in the art. In the step of shio-zuri, the concentration of sodium chloride is regulated preferably to 2 to 4 % based on the meat. At such a concentration, proteins in the meat can be efficiently solubilized and an appropriate saltiness can be imparted to the final product. In addition to sodium chloride, other components may be used in this step, so long as the effects of sodium chloride are not inhibited thereby. For example, use may be made therefor of sweeteners, seasonings, etc., as will be described hereinafter. The shio-zuri can be carried out by using an apparatus usually employed therefor, for example, a food cutter, an attritor or a silent cutter.

The foaming by stirring, which is the subsequent procedure, may be conducted either batch-wise or continuously. In a batch process, use may be made therefor of an attritor, a silent cutter or a high-speed cutter. In a continuous process, it is possible to use, for example, a continuous pin mixer described in JP (Kokoku) Sho 63-63190 (Fig. 2). By using the continuous process, the product can be efficiently produced without any suspension. The foaming is carried out so that the final product has a specific gravity of from 0.3 to 0.95, preferably from 0.4 to 0.8, still preferably from 0.5 to 0.75, and from 0.5 to 0.6 in the most desirable case. When the product has a high specific gravity due to poor foaming, it has a high gel strength and relatively hard texture. Namely, an excessively high specific gravity is inappropriate for processed foods with soft texture. On the other hand, a product having a low specific gravity due to rich foaming shows a low gel strength and soft texture. However, the air-content and specific gravity may be appropriately controlled depending on the desired texture and physical properties of the product. A foaming agent may be added to the meat composition prior to the foaming by stirring. The foaming agent can elevate the viscosity of the composition and thus allow to maintain air bubbles incorporated into the composition during stirring as such. It may be selected from various ones which are suitable for edible use and exert no undesirable effect on other steps of the present invention. Examples of the foaming agent usable in the present invention include yam, egg albumen, thickening polysaccharides (guar gum, etc.) and emulsifiers. Either one of these foaming agents or a mixture thereof may be employed. The amount of the foaming agent varies depending on the air content. That is to say, the amount of the foaming agent employed is increased with an increase in the foam volume. To the foamed composition, side materials (seasonings, sweeteners, starch, bread crumbs, etc.) may be added. Furthermore, solid matters such as vegetable and meat pieces may be added to the foamed composition.

The molding is performed by a method commonly employed in the art with the use of a molding machine, etc. For example, the foamed composition is shaped into balls, ovals, etc. depending on the desired final product. The heating is also carried out in a conventional manner, for example, frying, steaming, boiling or roasting. These procedures may be appropriately combined with each other depending on the desired final product.

The production process as described above may further involve additional steps. For example, additives (sweeteners, seasonings, starch, bread crumbs, vegetables, etc.) maybe added at an appropriate step. Moreover, ground meat or meat blocks may be added to the foamed composition. The types and amounts of these additives may be appropriately selected within the scope known by those skilled in the art, so long as the specific gravity of the final product falls within the range of from 0.3 to 0.95. The addition timing is not particularly restricted too. In particular, sweeteners, seasonings, etc. may be added either before or after the foaming by stirring. The production process of the present invention may involve additional procedures.

To further illustrate the present invention in greater detail, the following Examples will be given.

### (Example 1)

35 g of sodium chloride was added to 1 kg of ground lean beef which was then subjected to shio-zuri by using a silent cutter (manufactured by Bibun). When the mixture became viscous, 10 g of guar gum and 100 g of egg albumen were added thereto and the resultant composition was foamed by stirring with a silent cutter (manufactured by Bibun). When the specific gravity of the composition reached about 0.70, 50 g of potato starch, 20 g of sodium glutamate, 5 g of pepper and 500 ml of water were added thereto followed by well mixing. The composition showed a specific gravity of 0.80 at this stage. Next, the composition was molded into a circular form (diameter: 8 cm, thickness: 1 cm) and heated in hot water at 85 to 95°C for 15 minutes to thereby give a foamed processed beef product.

This processed beef product had a soft texture never observed in the conventional products. It tasted soft and good when fried in butter or sandwiched.

### (Example 2)

40 g of sodium chloride was added to 1 kg of ground chicken breast which was then subjected to shio-zuri by using a silent cutter (manufactured by Bibun). When the mixture became viscous, 50 g of yam, 10 g of guar gum and 100 g of egg albumen were added thereto and the resultant composition was foamed by stirring with a silent cutter (manufactured by Bibun). When the composition was sufficiently foamed, 70 g of potato starch, 30 g of sucrose, 20 g of sodium glutamate, 50 g of chicken extract, 5 g of pepper and 350 g of water were added thereto followed by well mixing. The composition showed a specific gravity of 0.5 at this stage. Next, 400 g of ground chicken and 200 g of small onion pieces were added to the foamed composition. The resultant composition showed a specific gravity of 0.75. Then the composition was molded into an oval form (10 cm x 7 cm, thickness: 12 mm) and steamed in a steamer at 85 to 95 °C for 15 minutes to thereby give a foamed processed chicken product.

This processed chicken product had a soft and light texture while sustaining the grained touch characteristic to ground meat.

## Claims

1. A process for producing foamed processed meat foods having specific gravity of 0,3 to 0,95 comprising mixing meat with sodium chloride under agitation (so-called "shio-zuri") foaming the resultant composition by stirring and then molding and heating it, water being added between the foaming by stirring and the subsequent molding."

2. A process according to claim 1, in which the specific gravity is from 0,4 to 0,8.

3. A process according to claim 1, in which the specific gravity is from 0,5 to 0,75.

4. A process according to claim 1, in which the specific gravity is from 0,5 to 0,6.

5. A process according to claim 1, in which the concentration of sodium chloride is 2% to 4% based on the meat.

6. A process according to claim 1, in which the heating is carried out by steaming or boiling.

## Patentansprüche

1. Verfahren zur Herstellung von geschäumter, verarbeiteter Fleischnahrung mit einem spezifischen Gewicht von 0,3 - 0,95, umfassend das Mischen des Fleisches mit Natriumchlorid unter Aufrühren (sogenanntes "shio-zuri"), das Schäumen der erhaltenen Zusammensetzung durch Rühren und anschließend dessen Formen und Erhitzen, wobei Wasser zwischen dem Schäumen durch Rühren und dem nachfolgenden Formen zugegeben wird.

2. Verfahren nach Anspruch 1, wobei das spezifische Gewicht 0,4 - 0,8 beträgt.

3. Verfahren nach Anspruch 1, wobei das spezifische Gewicht 0,5 - 0,75 beträgt.

4. Verfahren nach Anspruch 1, wobei das spezifische Gewicht 0,5 - 0,6 beträgt.

5. Verfahren nach Anspruch 1, wobei die Konzentration des Natriumchlorids 2% - 4%, bezogen auf das Fleisch, beträgt,.

6. Verfahren nach Anspruch 1, wobei das Erhitzen durch Dämpfen oder Kochen ausgeführt wird.

## Revendications

1. Procédé pour produire des aliments à base de mousse de viande ayant une gravité spécifique de 0,3 à 0,95 comprenant :
- le fait de mélanger la viande avec du chlorure de sodium sous agitation (appelé « shio-zuri »)
- le fait d'aérer la composition résultante par agitation et ensuite
- le fait de la mouler et de la chauffer, l'eau étant ajoutée entre l'étape d'aération par agitation et l'étape suivante de moulage

2. Procédé selon la revendication 1, dans lequel la gravité spécifique est de 0,4 à 0,8.

3. Procédé selon la revendication 1, dans lequel la gravité spécifique est de 0,5 à 0,75.

4. Procédé selon la revendication 1, dans lequel la gravité spécifique est de 0,6 à 0,6.

5. Procédé selon la revendication 1, dans lequel la concentration de chlorure de sodium est de 2% à 4% par rapport à la viande.

6. Procédé selon la revendication 1, dans lequel le chauffage est effectué par un passage à la vapeur ou par le fait de faire bouillir.
